# EUROPEAN PATENT SPECIFICATION

(11) **EP 1 659 313 B1**
(45) Date of publication and mention of the grant of the patent: **25.02.2009**
(21) Application number: 05023582.9
(22) Date of filing: 28.10.2005
(51) Int. Cl.: F16H 37/04

(54) **Transmission system**
Antriebssystem
Système de transmission

(30) Priority: 18.11.2004 GB 0425466
(43) Date of publication of application: 24.05.2006
(73) Proprietor: XTRAC TRANSMISSIONS LIMITED, Berkshire RG19 4ZA (GB)
(72) Inventor: Moore, Adrian, Cold Ash, Berkshire RG18 9PS (GB); Dickinson, Melvyn, Aldershot, Hampshire GU11 3DS (GB); Hawkins, Clifford, Wokingham, Berkshire RG40 4QD (GB)
(74) Representative: Raynor, Simon Mark

(56) References cited:
- GB-A- 848 746
- PATENT ABSTRACTS OF JAPAN vol. 015, no. 199 (M-1115), 22 May 1991 (1991-05-22) -& JP 03 051567 A (TOCHIGI FUJI IND CO LTD), 5 March 1991 (1991-03-05)
- PATENT ABSTRACTS OF JAPAN vol. 2003, no. 06, 3 June 2003 (2003-06-03) -& JP 2003 042241 A (TOKYO R & D CO LTD), 13 February 2003 (2003-02-13)
- PATENT ABSTRACTS OF JAPAN vol. 006, no. 246 (M-176), 4 December 1982 (1982-12-04) & JP 57 144333 A (TOSHIBA KIKAI KK), 6 September 1982 (1982-09-06)

## Description

The present invention relates to a road vehicle. In a particularly preferred embodiment, the invention relates to a high performance motor vehicle such as a racing car, although it is not restricted to that use.

To transmit drive in a motor vehicle from a longitudinally-mounted gearbox or drive shaft to a transversely-mounted driven axle it is known to use a hypoid and intersecting bevel differential. Hypoid and intersecting bevels allow a 90 degree connection between the power output and the driven axle. The hypoid bevels also allow the two axles to be offset. from one another (i.e. their axes do not intersect). The ability to offset the axles allows the power supply to be either lower or higher than the axle, thus either minimizing the intrusion into the passenger compartment, or increasing the ground clearance of the vehicle, or providing other vehicle packaging advantages.

In certain applications the combination of high power and the need for a high reduction ratio between the shaft output from the gearbox and that of the driven axle can result in large diameter gears and poor reliability and efficiency. Although this may sometimes be acceptable in road passenger vehicles, in motorsport applications this can reduce the effective performance of the vehicle.

GB 848,746 relates to a gearbox for the axle gears of power-driven rail vehicles, in which a driving shaft drives a pinion spindle via a set of bevel gears and the pinion spindle meshes with a spur wheel on a wheel axle. This GB-A-848 746 shows a vehicle including a longitudinally-mounted drive shaft, a transversely-mounted driven axle, and a transmission system for transferring drive from the longitudinally-mounted drive shaft to the transversely-mounted driven axle, wherein the transmission system includes a pair of bevel gears comprising a first gear and a second gear arranged in mutual engagement with the axes of said first and second gears substantially perpendicular, and a pair of transfer gears comprising a third gear and a fourth gear arranged in mutual engagement, wherein the axes of the second, third and fourth gears are substantially parallel and the first and second pairs of gears are interconnected for simultaneous rotation, and the fourth gear is mounted on and connected to the transversely-mounted driven axle.

JP 03-051567 A describes a power transmission device for a road vehicle, in which the thermal influence of the exhaust is reduced by the arrangement of a pair of bevel gears.

JP 2003-042241 A describes a transmission for a vehicle, in which power is transmitted from the engine to the rear axle via a pair of bevel gears, two spur gears and a transversely-mounted gearbox.

JP 57-144333 A describes a bevel gear device for a machine, having increased supporting rigidity for the bevel gears.

It is an object of the present invention to provide a transmission system that mitigates one or more of the aforesaid disadvantages.

According to the present invention there is provided a road vehicle having the features of claim 1.

The transmission system is more efficient than previous systems that use a hypoid and intersecting bevel differential, and it therefore increases the effective performance of the vehicle in which it is mounted. It also allows the packaging requirements of the vehicle to be easily adjusted, for example to provide more ground clearance or reduced intrusion into the passenger compartment. The reduction ratio provided by the transmission system can also be easily adjusted.

Advantageously, the axes of said first and second gears lie in the same plane. Alternatively, the axes of said first and second gears may be offset, for example by a distance of up to 30mm.

Advantageously, the axis of the fourth gear is offset from the axis of the first gear, typically by a distance in the range 10-150mm.

Advantageously, the second and third gears are mounted on a common shaft for simultaneous rotation.

Advantageously, the gear ratio of the first and second gears is in the range 1:1 to 1:4, preferably 1:1.5 to 1:3, and the gear ratio of the third and fourth gears is in the range 1:1 to 1:4, preferably 1:1.5 to 1:3. The overall gear ratio between the first and fourth gears is advantageously in the range 1:2 to 1:8, preferably 1:3 to 1:7.

An embodiment of the invention will now be described, by way of example, with reference to the accompanying drawings, in which:
Figure 1 is a side view of a transmission system for a vehicle according to the invention, and
Figure 2 is a view of the transmission system from above.

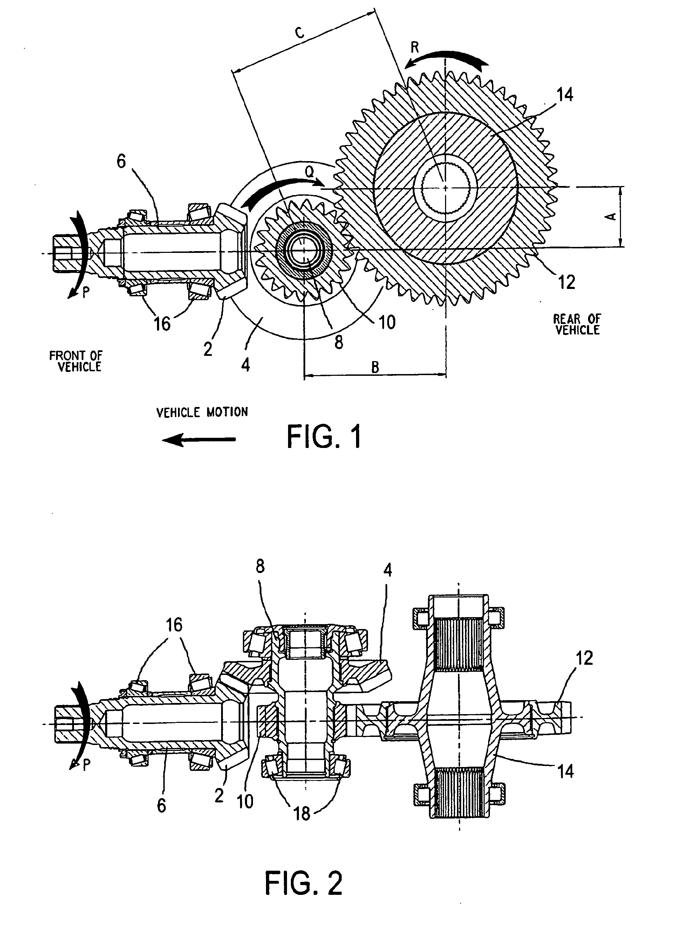

The transmission system shown in figures 1 and 2 uses two sets of gears, the first set comprising an intersecting bevel pair consisting of a pinion first gear 2 and a crownwheel second gear 4. The pinion 2 is mounted on a longitudinal drive shaft 6, which may typically be coupled to the output shaft of a longitudinally mounted gearbox or a propellor shaft (or drive shaft) that is connected to the gearbox. The crownwheel 4 is mounted on a transverse shaft 8, which is substantially perpendicular to and in the same plane as the longitudinal shaft 6. The bevel gears are preferably spiral-cut, although they may alternatively be straight-cut.

The second set of gears comprises a pair of transfer gears, consisting of a gear pinion third gear 10 and a larger fourth gear wheel 12. The gear pinion 10 is mounted on the transverse shaft 8 and is interconnected with the crownwheel 4 for simultaneous rotation therewith. This gear pinion 10 in turn drives gear wheel 12, which is transversely mounted and connected to the driven axles (not shown), in this example via a spool 14. In high performance racing vehicles, the transfer gears are preferably straight-cut spur gears. In other applications, helical-cut gears may be preferred.

The axis of the fourth gear wheel 12 is offset from the plane defined by the axes of the first and second gears, in this case being displaced above that plane by a distance A. The dimension A depends on the vehicle application, but in a motor car is typically in the range 10 to 150mm. The displacement may be above or below the plane defined by the axes of the first and second gears, depending on the packaging requirements of the vehicle for which the transmission system is designed.

The pinion first gear 2 is mounted on bearings 16, which are shown in this example as taper bearings but which could be any other type of bearing capable of taking a combination of thrust and radial loads. The crownwheel 4 and the gear pinion 10 are mounted on the transverse shaft 8, which in turn is supported on bearings 18: again these are shown as taper bearings, but they could be any other type of bearing capable of taking a combination of thrust and radial loads.

The two sets of gears together provide a reduction ratio from the first gear to the fourth gear that is typically in the range 1:2 to 1:8, a range of 1:3 to 1:7 being preferred. This reduction ratio is preferably split approximately evenly between the two sets of gears, each set typically providing a reduction ratio in the range 1:1 to 1:4, preferably 1:1.5 to 1:3.

In operation, the bevel pinion 2 rotates around the longitudinal axis of the shaft 6 in direction P. This in turn drives the crownwheel 4 and the gear pinion 10, which rotate in direction Q about the axis of the transverse shaft 8. The gear pinion 10 drives gear wheel 12 and spool 14, which rotate about the transverse axis of the spool 14 in direction R. Orientated as shown this ensures forward vehicle motion.

Various modifications of the transmission system are of course possible. For example, the system could be configured with the directions of rotation reversed and the crownwheel 4 mounted on the opposite side of the gear pinion. The system could also be mounted with the power input from the rear, not from the front, depending on what rotational requirements are needed.

The gear centre distance C between the axes of the gear pinion 10 and the gear wheel 12 can be varied according to the load and packaging requirements. The dimension A shows the distance above the axis of the drive shaft 6 that can be achieved for the output axis of the spool 14 with this configuration. The horizontal distance B of the axis of the spool 14 from the axis of the transverse shaft 8 can be altered by changing dimension A and/or dimension C. The drawings show the axis of the spool 14 above the axis of the drive shaft 6 in the vehicle, but this could also be below or even in line with that axis, dimension A then being zero. Gear wheel 12 could be rotated around the axis of the transverse shaft 8 such that it is forward of that axis.

It is possible that for reasons of packaging the unit in a vehicle, the bevel gears 2 and 4 could have a small hypoid offset in the range of up to approximately 30mm. Whilst this would negate some of the efficiency benefit of the unit, there may be an advantage to the total vehicle performance in doing so. The hypoid could be positive or negative, i.e. above or below the axis of gear 2.

It is possible to replace the spool 14 with a differential unit of the various types available.

A novel aspect of the transmission system described above is that the gear assembly is mounted on the driven axle. The benefits of this include a significant improvement in operating efficiency, the ability to use a smaller diameter gear wheel (gear wheel 12), and the ability to change the reduction ratio easily.

The driven axle may consist of a chassis mounted axle where independent suspension is utilized, or a solid or live axle.

## Claims

1. A road vehicle including a longitudinally-mounted drive shaft (6), a transversely-mounted driven axle (14), and a transmission system for transferring drive from the longitudinally-mounted drive shaft to the transversely-mounted driven axle, wherein the transmission system includes a pair of bevel gears comprising a first gear (2) and a second gear (4) arranged in mutual engagement with the axes of said first and second gears substantially perpendicular, and a pair of transfer gears comprising a third gear (10) and a fourth gear (12) arranged in mutual engagement, wherein the axes of the second, third and fourth gears are substantially parallel and the first and second pairs of gears are interconnected for simultaneous rotation, and the fourth gear (12) is mounted on and connected to the transversely-mounted driven axle (14); whereby the first gear (2) is mounted on an end of the longitudinally-mounted drive shaft (6), whereby the axis of the fourth gear (12) can be above, below or in line with the axis of drive shaft (6).

2. A road vehicle according to claim 1, wherein the axes of said first and second gears (2,4) lie in the same plane.

3. A road vehicle according to claim 1, wherein the axes of said first and second gears (2,4) are offset.

4. A road vehicle according to any one of the preceding claims, wherein the axis of the fourth gear (12) is offset from the axis of the first gear (2).

5. A road vehicle according to any one of the preceding claims, wherein the second and third gears (4,10) are mounted on a common shaft (8) for simultaneous rotation.

6. A road vehicle according to any one of the preceding claims, wherein the gear ratio of the first and second gears (2,4) is in the range 1:1 to 1:4, preferably 1:1.5 to 1:3.

7. A road vehicle according to any one of the preceding claims, wherein the gear ratio of the third and fourth gears (10,12) is in the range 1:1 to 1:4, preferably 1:1.5 to 1:3.

8. A road vehicle according to any one of the preceding claims, wherein the overall gear ratio between the first and fourth gears (2,12) is in the range 1:2 to 1:8, preferably 1:3 to 1:7.

## Patentansprüche

1. Straßenfahrzeug, das eine längs angebrachte Antriebswelle (6), eine quer angebrachte Abtriebsachse (14) und ein Getriebesystem zum Übertragen des Antriebs von der längs angebrachten Antriebswelle zu der quer angebrachten Abtriebsachse einschließt, wobei das Getriebesystem Folgendes einschließt: ein Paar von Kegelrädern, das ein erstes Zahnrad (2) und ein zweites Zahnrad (4) umfasst, die in wechselseitigem Eingriff angeordnet sind, wobei die Achsen des ersten und des zweiten Zahnrades im Wesentlichen senkrecht sind, und ein Paar von Übertragungsrädern, das ein drittes Zahnrad (10) und ein viertes Zahnrad (12) umfasst, die in wechselseitigem Eingriff angeordnet sind, wobei die Achsen des zweiten, des dritten und des vierten Zahnrades im Wesentlichen parallel sind und das erste und das zweite Paar von Zahnrädern für eine gleichzeitige Drehung miteinander verbunden sind und das vierte Zahnrad (12) an der quer angebrachten Abtriebsachse (14) angebracht und mit derselben verbunden ist, wobei das erste Zahnrad (2) an einem Ende der längs angebrachten Antriebswelle (6) angebracht ist, wobei die Achse des vierten Zahnrades (12) oberhalb, unterhalb oder in einer Linie mit der Achse der Antriebswelle (6) liegen kann.

2. Straßenfahrzeug nach Anspruch 1, wobei die Achsen des ersten und des zweiten Zahnrades (2, 4) in der gleichen Ebene liegen.

3. Straßenfahrzeug nach Anspruch 1, wobei die Achsen des ersten und des zweiten Zahnrades (2, 4) versetzt sind.

4. Straßenfahrzeug nach einem der vorhergehenden Ansprüche, wobei die Achse des vierten Zahnrades (12) gegenüber der Achse des ersten Zahnrades (2) versetzt ist.

5. Straßenfahrzeug nach einem der vorhergehenden Ansprüche, wobei das zweite und das dritte Zahnrad (4, 10) für eine gleichzeitige Drehung auf einer gemeinsamen Welle (8) angebracht sind.

6. Straßenfahrzeug nach einem der vorhergehenden Ansprüche, wobei das Übersetzungsverhältnis des ersten und des zweiten Zahnrades (2, 4) im Bereich von 1:1 bis 1:4, vorzugsweise 1:1,5 bis 1:3, liegt.

7. Straßenfahrzeug nach einem der vorhergehenden Ansprüche, wobei das Übersetzungsverhältnis des dritten und des vierten Zahnrades (10, 12) im Bereich von 1:1 bis 1:4, vorzugsweise 1:1,5 bis 1:3, liegt.

8. Straßenfahrzeug nach einem der vorhergehenden Ansprüche, wobei das Gesamtübersetzungsverhältnis zwischen dem ersten und dem vierten Zahnrad (2, 12) im Bereich von 1:2 bis 1:8, vorzugsweise 1:3 bis 1:7, liegt.

## Revendications

1. Véhicule routier comprenant un arbre de transmission monté longitudinalement (6), un essieu moteur monté transversalement (14), et un système de transmission pour transférer le mouvement de l'arbre de transmission monté longitudinalement à l'essieu moteur monté transversalement, où le système de transmission comprend une paire d'engrenages coniques comprenant un premier engrenage (2) et un deuxième engrenage (4) agencés en engrènement mutuel avec les axes desdits premier et deuxième engrenages de manière sensiblement perpendiculaire, et une paire d'engrenages de transfert comprenant un troisième engrenage (10) et un quatrième engrenage (12) agencés en engrènement mutuel, où les axes des deuxième, troisième et quatrième engrenages sont sensiblement parallèles et les première et deuxième paires d'engrenages sont reliées entre elles pour une rotation simultanée, et le quatrième engrenage (12) est monté sur et est relié à l'essieu moteur monté transversalement (14) ; grâce à quoi le premier engrenage (2) est monté sur une extrémité de l'arbre de transmission monté longitudinalement (6), grâce à quoi l'axe du quatrième engrenage (12) peut être au-dessus, en dessous ou en ligne avec l'axe de l'arbre de transmission (6).

2. Véhicule routier selon la revendication 1, où les axes desdits premier et deuxième engrenages (2, 4) sont dans le même plan.

3. Véhicule routier selon la revendication 1, où les axes desdits premier et deuxième engrenages (2, 4) sont décalés.

4. Véhicule routier selon l'une quelconque des revendications précédentes, où l'axe du quatrième engrenage (12) est décalé de l'axe du premier engrenage (2).

5. Véhicule routier selon l'une quelconque des revendications précédentes, où les deuxième et troisième engrenages (4, 10) sont montés sur un arbre commun (8) pour une rotation simultanée.

6. Véhicule routier selon l'une quelconque des revendications précédentes, où le rapport d'engrenage des premier et deuxième engrenages (2, 4) est dans le domaine de 1 : 1 à 1 : 4, de préférence 1 : 1,5 à 1 : 3.

7. Véhicule routier selon l'une quelconque des revendications précédentes, où le rapport d'engrenage des troisième et quatrième engrenages (10, 12) est dans le domaine de 1 : 1 à 1 : 4, de préférence 1 : 1,5 à 1 : 3.

8. Véhicule routier selon l'une quelconque des revendications précédentes, où le rapport d'engrenage total entre les premier et quatrième engrenages (2, 12) est dans le domaine de 1 : 2 à 1 : 8, de préférence 1 : 3 à 1 : 7.
